# EUROPÄISCHE PATENTSCHRIFT

(11) **EP 1 246 711 B1**
(45) Veröffentlichungstag und Bekanntmachung des Hinweises auf die Patenterteilung: **09.02.2005**
(21) Anmeldenummer: 00993386.2
(22) Anmeldetag: 13.12.2000
(51) Int. Cl.: B23K 26/00, B23K 26/10, F01D 5/18

(54) **VERFAHREN ZUM HERSTELLEN EINER ÖFFNUNG IN EINEM METALLISCHEN BAUTEIL**
METHOD FOR PRODUCING AN OPENING IN A METALLIC STRUCTURAL PART
PROCEDE DE REALISATION D'UN ORIFICE DANS UN COMPOSANT METALLIQUE

(30) Priorität: 16.12.1999 DE 19960797
(43) Veröffentlichungstag der Anmeldung: 09.10.2002
(73) Patentinhaber: MTU Aero Engines GmbH, 80995 München (DE); Lasertec GmbH, 87459 Pfronten (DE)
(72) Erfinder: RICHTER, Karl-Hermann, 85229 Markt Indersdorf (DE); HILDEBRAND, Peter, D-87459 Pfronten (DE); KUHL, Michael, D-87629 Füssen (DE); REISACHER, Martin, D-87439 Kempten (DE)
(74) Vertreter: Lindner-Vogt, Karin, Dipl.-Phys.
(86) Internationale Anmeldenummer: PCT/DE2000/004422
(87) Internationale Veröffentlichungsnummer: WO 2001/043912

(56) Entgegenhaltungen:
- EP-A- 0 950 463
- FR-A- 2 126 869
- S. NOLTE, G. KAMLAGE: "Mikrostrukturierung mit Femtosekundenlasern" LASEROPTO, Bd. 31, Nr. 3, 15. April 1999 (1999-04-15), Seiten 72-76, XP000999012
- PATENT ABSTRACTS OF JAPAN vol. 1999, no. 13, 30. November 1999 (1999-11-30) & JP 11 224865 A (NGK INSULATORS LTD), 17. August 1999 (1999-08-17)

## Beschreibung

Die Erfindung betrifft ein Verfahren zum Herstellen einer Öffnung in einem metallischen Bauteil, bei dem die Öffnung wenigstens abschnittsweise einen nicht zylindrisch ausgebildeten Trichter umfasst, sich von einer ersten Oberfläche zu einer zweiten Oberfläche des Bauteils erstreckt und mit einem Laserstrahl ausgebildet wird.

Die EP-A-0950463 offenbart ein Verfahren zum Ausbilden einer einen Diffusorabschnitt umfassenden Kühlbohrung, bei dem der Diffusorabschnitt mit einem Strahlbohrverfahren so ausgeschnitten wird, dass der Bohrstrahl innerhalb einer zuvor ausgewählten Querschnittsfläche bleibt.

Aus S. NOLTE, G. KAMLAGE: 'Mikrostrukturierung mit Femtosekundenlasern' LASE-ROPTO, Bd. 31, Nr. 3, 15. April 1999 (1999-04-15), Seiten 72-76, XP000999012, ist bekannt, dass bei der Laserbearbeitung eine kürzer werdende Pulsdauer und eine Verringerung des Umgebungsdrucks die Sublimation des Materials fördert und zu einer verbesserten Werkstückoberfläche führt. Insbesondere beim Laserstrahlenbohren lässt sich die Riefigkeit der Bohrung und des Bohrkerns durch eine Verringerung des Umgebungsdrucks und durch spezielle Prozessgase, wie Helium, verbessern.

Aus der US 5,609,779 ist ein Verfahren zum Laserbohren von nicht kreisförmigen Öffnungen in einem metallischen Bauteil bekannt, bei dem die Öffnung ein sich bis zu einer Oberfläche des Bauteils erstreckenden Diffusor umfasst, der durch durch Verdampfen des Metalles mittels eines Lasers hergestellt wird, wobei der Laserstrahl die Oberfläche von einer Mittellinie des Diffusors aus quer zu beiden Seiten mit jeweils ansteigender Geschwindigkeit und sich überlappenden Laserpunkten überquert, um mit einem konventionellen Laser nicht kreisförmige Öffnungen möglichst kostengünstig und mit relativ guter Oberfläche herstellen zu können. Durch die ansteigende Geschwindigkeit und das Überlappen sollen Toleranzen in der Pulsenergie, die zu einem variierenden Materialabtrag führen, ausgeglichen und gleichzeitig die spezielle, im Querschnitt nicht kreisförmige Form des Diffusors hergestellt werden.

Als problematisch erweist sich dabei, dass durch die verwendete Pulsfrequenz und Pulsdauer das Metall flüssig wird, was sich nachteilig auf die Oberfläche des Diffusors auswirkt. Infolge der Laserbearbeitung mit zunehmender Geschwindigkeit variiert die Dicke der Schichten und nimmt von der Mittellinie nach außen hin ab, wodurch sich insbesondere bei mehreren aufeinanderfolgenden Schichten aufsummierende Ungenauigkeiten im Hinblick auf die Form des Diffusors ergeben können.

Die Aufgabe der vorliegenden Erfindung besteht darin, ein Verfahren der eingangs beschriebenen Gattung zu schaffen, mit dem sich Öffnungen mit möglichst guter Oberfläche und Formgenauigkeit ausbilden lassen.

Diese Aufgabe wird erfindungsgemäß durch ein Verfahren nach Anspruch 1 gelöst.

Vorteilhaft bei dem Materialabtrag durch Sublimieren infolge der hohen Energieeinbringung pro Puls ist, dass undefinierte Ablagerungen von zähflüssigem Material im Bereich der abzutragenden Öffnung bzw. des Trichters, die zu einer erhöhten Rauhigkeit führen, vermieden werden. Durch das definierte Abtragen in Schichten mit im wesentlichen konstanter Dicke ist eine hohe Formgenauigkeit bei einer geringen Rauhigkeit der Oberfläche der Öffnung und/oder des Trichters gewährleistet. Das Verfahren ist fertigungstechnisch rationell durchführbar. Eine abschließende Nachbearbeitung der so ausgebildeten Oberfläche der Öffnung bzw. des Trichters ist nicht erforderlich, wodurch beim Herstellungsprozess Zeit und Kosten eingespart werden.

Der Laserstrahl kann beim Abtragen der Schicht mit konstanter Geschwindigkeit relativ zu der jeweiligen Oberfläche, beginnend bei einer äußeren Oberfläche, des Bauteils bewegt werden, um auf die Weise einen definierten Abtrag von Schichten von im wesentlichen konstanter Dicke zu erzielen. Die Relativbewegung zwischen dem Laserstrahl und dem zu bearbeitenden Bauteil wird im allgemeinen durch Bewegen des Bauteils, das in einer Vorrichtung einer geeigneten Berbeitungsmaschine eingespannt ist, erzeugt. Ebenso kann diese durch eine im allgemeinen eingeschränktere Bewegung des Lasers oder eine überlagerte Bewegung erzielt werden.

Durch geeignete Laserparameter können Schichten mit im wesentlichen konstanter Dicke von 1 µm bis 10 µm abgetragen werden. Die Form und Abmessungen der hintereinander abgetragenen Schichten können der Form des Trichters angepasst werden, wodurch sich die Öffnungen wirtschaftlich ohne jede Nachbearbeitung herstellen lassen. Die Form des Trichters wird im wesentlichen durch einen eine Höhe H des Trichters bestimmenden, ersten Öffnungswinkel und einen eine Breite B bestimmenden, zweiten Öffnungswinkel beschrieben wird. Der Trichter kann alternativ auch kegelförmig mit einen kreisförmigen Querschnitt ausgebildet sein.

Zum Abtragen der Schichten kann ein Laserstrahl in mehreren benachbarten, im allgemeinen parallelen Bahnen über die jeweilige Oberfläche des Bauteils bewegt, wobei der Abtrag an einer äußeren Oberfläche des metallischen Bauteils beginnt und je Schicht z.B. zeilenweise erfolgt. Ein Überlappen der einzelnen Bahnen ist nicht erforderlich und wird zur möglichst rationellen Durchführung des Verfahrens vermieden.

Zur Realisierung von Schichten mit im wesentlichen konstanter Dicke kann sich der Laserstrahl entlang der einzelnen Bahnen mit konstanter Geschwindigkeit bewegen.

Das Laserabtragen kann mit einer Pulsfrequenz von 1 bis 50 kHz durchgeführt werden, um das Material bei der Ausbildung der Öffnung und/oder des Trichters überwiegend durch Sublimieren abzutragen. Dazu muß über einen extrem kurzen Zeitraum möglichst viel Energie je Puls in den abzutragenden Bereich eingebracht werden. Zur Realisierung des extrem kurzen Zeitraums kann das Laserabtragen mit einer Pulsdauer von 10 bis 1000 ns bei einer Pulsenergie von 0,005 bis 1 Joule je Puls durchgeführt werden, wobei mit diesen Laserparametern Pulsspitzenleistungen im Bereich von 50 kW bis 1 MW erzielt werden können.

Vor oder nach dem Ausbilden des Trichters kann ein im Querschnitt im wesentlichen kreisförmiger bzw. zylindrischer (Öffnungs-)Abschnitt der Öffnung durch Laserbohren ausgebildet werden, so dass die Öffnung einen nicht zylindrisch ausgebildeten Trichter und einen im wesentlichen zylindrisch ausgebildeten (Öffnungs-)Abschnitt umfasst. Beim Laserbohren des zylindrischen (Öffnungs-)Abschnitts wird der Laserstrahl in Richtung der im allgemeinen in einem spitzen Winkel zur Oberfläche des Bauteils verlaufenden Mittelachse der Öffnung ausgerichtet.

Der Laserstrahl kann sich beim Abtragen der Schicht spiralförmig über die jeweilige Oberfläche des Bauteils bewegen, wobei die Relativbewegung in der Mitte, wo die Mittelachse der Öffnung die äußere Oberfläche des Bauteils schneidet, oder am äußeren Umfang des Trichters beginnen kann.

Weitere Ausführungsbeispiele der Erfindung sind in den Unteransprüchen beschrieben.

Im folgenden wird die Erfindung anhand von Ausführungsbeispielen unter Bezugnahme auf eine Zeichnung näher erläutert ist. Es zeigt:
- Fig. 1: in perspektivischer Darstellung eine Turbinenschaufel einer Gasturbine mit als Kühlluftbohrungen ausgebildeten Öffnungen, die gemäß einer Ausgestaltung des erfindungsgemäßen Verfahrens hergestellt werden.
- Fig. 2: eine Querschnittsansicht durch eine Bauteilwand, in der ein in einem ersten Schritt gemäß einer Ausgestaltung des erfindungsgemäßen Verfahrens hergestellter, zylindrischer Öffnungsabschnitt dargestellt ist,
- Fig. 3: eine Querschnittsansicht durch eine Bauteilwand, in der eine gemäß einem einer Ausgestaltung des erfindungsgemäßen Verfahrens hergestellte Öffnung dargestellt ist und
- Fig. 4: eine Querschnittsansicht durch eine Bauteilwand, in der eine andere gemäß einer alternativen Ausgestaltung des erfindungsgemäßen Verfahrens hergestellte Öffnung dargestellt ist.

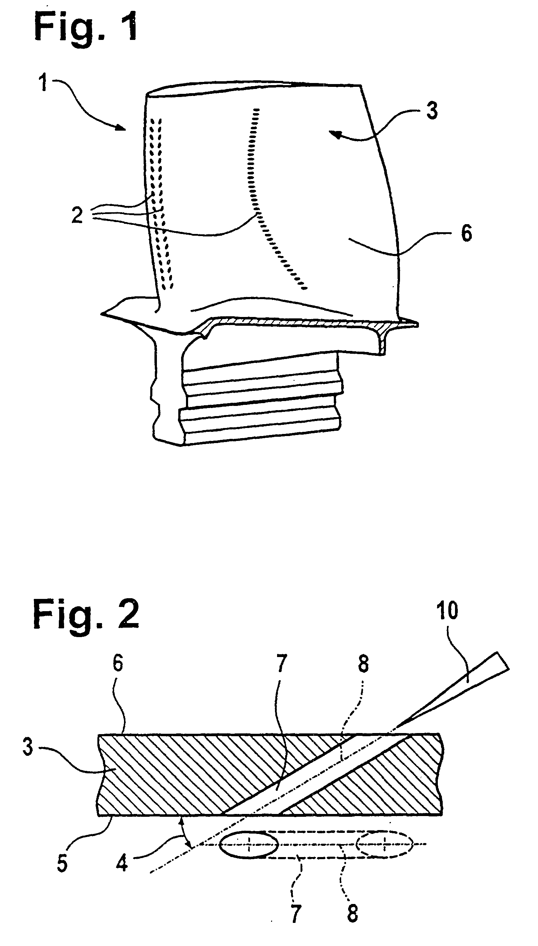

Fig. 1 zeigt als metallisches Bauteil eine Turbinenschaufel 1 einer Gasturbine, wie z.B. einem Flugtriebwerk, in perspektivischer Darstellung, in der zahlreiche als Kühlluftbohrungen ausgebildete Öffnungen 2 nach dem erfindungsgemäßen Verfahren ausgebildet sind. Die Kühlluftbohrungen 2 verlaufen im allgemeinen in einem in Fig. 2 gezeigten, spitzen Winkel 4 durch die Bauteilwand 3, welcher meist im Bereich von 12° bis 35° zu einer äußeren Oberfläche 6 des Bauteils 1 liegt und z.B. 30° beträgt. Aus einem Hohlraum in der Turbinenschaufel 1 wird Verdichterluft durch die Kühlluftbohrungen 2 geleitet, um einen Kühlluftfilm über die äußere Oberfläche 5 der Turbinenschaufel 1 zu leiten.

Die Turbinenschaufel 1 besteht aus einem Metall, wie z.B. einer Ni- oder Co-Basislegierung, und wird zur Herstellung der Öffnungen 2 in einer geeigneten Bearbeitungsmaschine eingespannt, in der sie entlang mehrer Achsen verfahren bzw. gedreht werden kann. Die Relativbewegung zwischen einem Laser, mit dem das Ausbilden der Öffnung 2 durch Laserabtragen erfolgt, und dem zu bearbeitenden Bauteil 1 wird im allgemeinen durch Bewegen des Bauteils 1 erzeugt. Ebenso kann diese durch eine im allgemeinen eingeschränktere Bewegung des Lasers oder eine überlagerte Bewegung erzielt werden.

Fig. 2 zeigt eine geschnittene Ansicht der Bauteilwand 3 der Turbinenschaufel 1, in welcher ein in einem ersten Schritt nach einem Ausführungsbeispiel des erfindungsgemäßen Verfahrens hergestellter Öffnungsabschnitt 7 mit im wesentlichen kreisförmigem Querschnitt dargestellt ist. Die Mittelachse 8 dieses zylinderförmigen Öffnungsabschnitts 7 läuft in einem spitzen Winkel 4 von etwa 30° durch die Bauteilwand 3. Infolgedessen ist der kreisförmige Querschnitt in der lediglich gestrichelt angedeuteten Draufsicht in der inneren, ersten und der äußeren, zweiten Oberfläche 5 bzw. 6 länglich dargestellt.

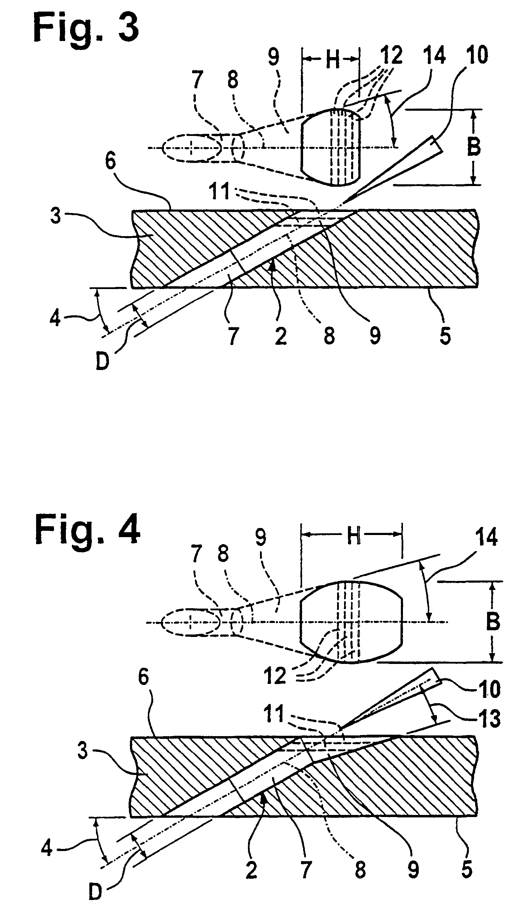

Die nach dem erfindungsgemäßen Verfahren hergestellten Öffnungen 2 sind Durchgangsöffnungen und erstrecken sich von der inneren, ersten Oberfläche bis zur äußeren zweiten Oberfläche 5 bzw. 6 der Bauteilwand 3. Vor der Ausbildung eines in Fig. 3 gezeigten, im Querschnitt nicht kreisförmigen Trichters 9 wird zunächst in einem ersten Schritt der Öffnungsabschnitt 7 mit kreisförmigen Querschnitt mittels Laserbohrens ausgebildet. Hierzu wird ein schematisch angedeuteter Laserstrahl 10 eines Nd-YAG-Lasers eingesetzt und in Richtung der Mittelachse 8 des zu bohrenden Öffnungsabschnitts 7 auf die äußere, zweite Oberfläche 6 der Bauteilwand 3 gerichtet. In Abhängigkeit von der Dicke der Bauteilwand 3 werden die Laserparameter, wie Pulsdauer und Pulsenergie, ebenso wie die Anzahl der Pulse gewählt.

Bei einem Ausführungsbeispiel des erfindungsgemäßen Verfahrens wird dann in einem zweiten Schritt der in Fig. 3 dargestellte, nicht zylindrische Trichter 9 ausgebildet, welchen die Kühlluftbohrungen 2 aus strömungstechnischen Gründen jeweils umfassen, um den Druck der hindurchströmenden Luft zu erhöhen. Hierzu wird das metallische Material beginnend von der äußeren, zweiten Oberfläche 6 durch geeignete Wahl der Laserparameter beim Laserabtragen sublimiert, so dass das Metall im wesentlichen nicht in die flüssige Phase gelangt und sich kein zähflüssiges Material unter Verschlechterung der Oberflächenqualität im abzutragenden Bereich ablagern kann.

Das Ausbilden des Trichters 9 erfolgt in der Weise, dass zur äußeren, zweiten Oberfläche 6 im wesentlichen parallele Schichten 11, die in Fig. 3 schematisch und stark vergrößert, gestrichelt angedeutet sind, abgetragen werden. Das Laserabtragen erfolgt mit einer Vielzahl von Pulsen des Laserstrahls 10, wobei die Pulsenergie an die Dicke der abzutragenden Schichten 11 angepasst wird. Abhängig von der gewünschten Form des Trichters 9, dessen eine Breite B bestimmender, zweiter Öffnungswinkel 14 zur Mittelachse 8 variieren kann und z.B. etwa 15° beträgt, liegt die Dicke der Schichten 11 zwischen 1 µm und 10 µm. Das Material der einzelnen Schichten 11 wird jeweils in stark vergrößert und gestrichelt angedeuteten Bahnen 12 laserabgetragen, in denen sich der Laserstrahl 10 relativ zur Oberfläche 6 des Bauteils 1 zeilenweise bewegt. Die Bewegung entlang der Bahnen 12 erfolgt mit konstanter Geschwindigkeit. Die Bahnen 12 erstrecken sich jeweils über die ganze Breite B oder bei anderer Ausrichtung die ganze Höhe H des Trichters 9.

Um das Sublimieren des metallischen Materials des Bauteils 1 zu gewährleisten, muß eine hohe Pulsenergie bei einer extrem kurzen Pulsdauer durch den Laserstrahl 10 in den abzutragenden Bereich eingebracht werden. Dazu wird der Nd-YAG-Laser mit einem Q-Switch ausgerüstet und eine Pulsenergie von 5 bis 100 mjoule je Puls bei einer Pulsdauer von 10 bis 1000 ns gewählt. Alternativ kann neben dem Nd-YAG-Bohrlaser ein separater Q-Switch-Nd-YAG-Laser verwendet werden.

In der in Fig. 3 gestrichelt angedeuteten Draufsicht auf die äußere, zweite Oberfläche 6 der Bauteilwand 3 ist zu erkennen, dass die Abmessungen des Trichters 9 so gewählt sind, dass eine aus einem ersten Öffnungswinkel 13 resultierende Höhe H geringer als die Breite B des Trichters 9 ist. Beim vorliegenden Ausführungsbeispiel entspricht die Höhe H dem Durchmesser D des Öffnungsabschnitts 7. Der Trichter 9 besitzt dieselbe Mittlachse 8 wie der Öffnungsabschnitt 7 und verläuft mithin koaxial zu diesem. Der Trichter 9 und der zylindrische Öffnungsabschnitt 7 bilden zusammen die Öffnung 2.

Fig. 4 zeigt in einer Querschnittsansicht eine andere als Kühlluftbohrung ausgebildete Öffnung 2, die nach einer alternativen Ausgestaltung des erfindungsgemäßen Verfahrens hergestellt ist. Auch bei dieser Kühlluftbohrung 2 wird zunächst in einem spitzen Winkel 4 von etwa 30° zur äußeren, zweiten Oberfläche 6 der Bauteilwand 3 der Turbinenschaufel 1 ein Öffnungsabschnitt 7 mit dem wesentlichen kreisförmigen Querschnitt durch Laserbohren ausgebildet. Der Laserstrahl 10 des Nd-YAG-Lasers wird dabei in Richtung der Mittelachse 8 des Öffnungsabschnitts 7 ausgerichtet.

In einem zweiten Schritt wird dann beginnend von der äußeren, zweiten Oberfläche 6 der Bauteilwand 3 der Trichter 9 durch Laserabtragen ausgebildet. Dabei wird der Nd-YAG-Laser mit einem Q-Switch ausgerüstet und ist durch entsprechende Wahl der Laserparameter in der Lage, das zur Ausbildung des Trichters 9 abzutragende metalliscne Material nahezu vollständig zu sublimieren. Alternativ kann neben dem im ersten Schritt eingesetzten Nd-YAG-Bohrlaser für den zweiten Schritt ein separater Q-Switch-Nd-YAG-Laser eingesetzt werden. Um die dazu erforderliche Pulsspitzenleistung im Bereich von 50 kW bis 1 MW in das abzutragende Material einzubringen, wird eine Pulsenergie von 0,005 bis 0,1 Joule je Puls und einer Pulsdauer von 10 bis 1000 ns bereitgestellt.
In Abhängigkeit von der Form des Trichters 9 wird die Dicke der jeweiligen Schicht 11 gewählt. Diese liegt im allgemeinen im Bereich von 1 µm bis 10 µm. In der in Fig. 4 gestrichelt angedeuteten Draufsicht ist zu erkennen, dass sich eine Breite B des Trichters 9 im wesentlichen symmetrisch zur Mittelachse 8 der Öffnung 2 erstreckt. Die Höhe H des Trichters 9 erstreckt sich asymmetrisch zur Mittelachse 8, da, wie in der Querschnittsansicht von Fig. 4 gut zu erkennen ist, der erste Öffnungswinkel 13 zur Mittelachse 8 zu einer Seite hin groß ist und etwa 16° beträgt. Der Trichter 9 knickt dadurch einseitig stärker von der Mittelachse 8 der Öffnung 2 ab.

Die Schichten 11 werden jeweils in den gestrichelt angedeuteten Bahnen 12, in denen sich der Laserstrahl 10 mit konstanter Geschwindigkeit relativ zum Bauteil 1 bewegt, abgetragen. Die Dicke der Schichten 11 wird in jedem Ausführungsbeispiel des erfindungsgemäßen Verfahrens der Form des Trichters 9 angepasst, welche im wesentlichen durch den die Höhe H bestimmenden, ersten Öffnungswinkel 13 und den die Breite B bestimmenden, zweiten Öffnungswinkel 14 beschrieben wird. Der Trichter 9 kann auch kegelförmig mit einen kreisförmigen Querschnitt ausgebildet sein.

In allen Ausgestaltungen des erfindungsgemäßen Verfahrens kann zunächst der Trichter 9 an der äußeren, zweiten Oberfläche 6 der Bauteilwand 3 durch Laserabtragen mittels eines mit einem Q-Switch ausgerüsteten Nd-YAG-Lasers ausgebildet werden und im Anschluß daran in einem zweiten Schritt der Öffnungsabschnitt 7 mit dem wesentlichen kreisförmigen Querschnitt durch Laserbohren mit einem Nd-YAG-Laser hergestellt werden, wobei auch hier der Trichter 9 und der zylindrische Öffnungsabschnitt 7 eine gemeinsame Mittelachse 8 aufweisen. Die Form des Trichters 9 kann je nach Anforderung durch die Wahl des Öffnungswinkles 13 und seiner Abmessungen H und B symmetrisch oder asymmetrisch zur Mittelachse 8 sein.

Das Material der einzelnen Schichten 11 kann in einer weiteren Ausgestaltung des erfindungsgemäßen Verfahrens abgetragen werden, indem sich der Laserstrahl 10 spiralförmig um die Mittelachse 8 der Öffnung 2 herum relativ zu äußeren Oberfläche 6 des metallischen Bauteils 1 bewegt.

## Patentansprüche

1. Verfahren zum Herstellen einer Öffnung in einem metallischen Bauteil, bei dem die Öffnung (2) wenigstens abschnittsweise einen nicht zylindrisch ausgebildeten Trichter (9) umfasst, sich von einer ersten Oberfläche (5) zu einer zweiten Oberfläche (6) einer Bauteilwand (3) erstreckt und mit einem Laserstrahl (10) ausgebildet wird, **dadurch gekennzeichnet, dass** das Metall bei der Ausbildung des Trichters (9) durch Wahl der Laserparameter überwiegend durch Sublimieren abgetragen wird und der Trichter (9) durch Laserabtragen von Schichten (11) mit im wesentlichen konstanter Dicke ausgebildet wird, wobei der Laserstrahl (10) beim Abtragen der Schichten (11) in mehreren benachbarten, in Länge und Anzahl der Form des Trichters (9) angepassten Bahnen (12) über die jeweilige Oberfläche (6) des Bauteils (1) bewegt wird.

2. Verfahren nach Anspruch 1, **dadurch gekennzeichnet, dass** sich der Laserstrahl (10) beim Abtragen der Schichten (11) mit konstanter Geschwindigkeit relativ zu der jeweiligen Oberfläche (5, 6) der Bauteilwand (3) bewegt.

3. Verfahren nach Anspruch 1 oder 2, **dadurch gekennzeichnet, dass** die Schichten (11) mit einer im wesentlichen konstanter Dicke von 1 µm bis 10 µm abgetragen werden.

4. Verfahren nach einem der vorhergehenden Ansprüche, **dadurch gekennzeichnet, dass** die Form und Abmessungen der Schichten (11) der Form des Trichters (9) angepasst werden.

5. Verfahren nach einem der vorhergehenden Ansprüche, **dadurch gekennzeichnet, dass** sich der Laserstrahl (10) entlang der einzelnen Bahnen (12) mit konstanter Geschwindigkeit bewegt.

6. Verfahren nach einem der vorhergehenden Ansprüche, **dadurch gekennzeichnet, dass** das Laserabtragen mit einer Pulsfrequenz von 1 bis 50 kHz durchgeführt wird.

7. Verfahren nach einem der vorhergehenden Ansprüche, **dadurch gekennzeichnet, dass** das Laserabtragen mit einer Pulsdauer von 10 ns bis 1 1000 ns durchgeführt wird.

8. Verfahren nach einem der vorhergehenden Ansprüche, **dadurch gekennzeichnet, dass** das Laserabtragen mit Pulsspitzenleistungen im Bereich von 50 kW bis 1 MW durchgeführt wird.

9. Verfahren nach einem der vorhergehenden Ansprüche, **dadurch gekennzeichnet, dass** vor oder nach dem Ausbilden des Trichters (9) ein im Querschnitt kreisförmiger Abschnitt (7) der Öffnung (2) durch Laserbohren ausgebildet wird.

10. Verfahren nach einem der vorhergehenden Ansprüche, **dadurch gekennzeichnet, dass** sich der Laserstrahl (10) beim Abtragen der Schichten (11) in einer spiralförmigen Bahn bewegt.

## Claims

1. Process for the production of an opening in a metallic component, in which the opening (2), in at least one section, comprises a non-cylindrical funnel (9), extends from a first surface (5) to a second surface (6) of a component wall (3), and is formed by means of a laser beam (10), **characterised in that** during the formation of the funnel (9) the metal is removed mainly by sublimation brought about by a choice of the laser parameters, and the funnel (9) is formed by the laser removal of layers (11) having substantially constant thickness, the laser beam (10) being moved over the respective surface (6) of the component (1) along a plurality of adjacent paths (12) matched in length and number to the shape of the funnel (9) as the layers (11) are removed.

2. Process according to Claim 1, **characterised in that** during the removal of the layers (11), the laser beam (10) moves with constant speed relative to the respective surfaces (5, 6) of the component wall (3).

3. Process according to Claims 1 or 2, **characterised in that** layers (11) having a substantially constant thickness of 1 µm to 10 µm are removed.

4. Process according to any of the preceding claims, **characterised in that** the shape and dimensions of the layers (11) are adapted to the shape of the funnel (9).

5. Process according to any of the preceding claims, **characterised in that** the laser beam (10) moves along its individual paths (12) at constant speed.

6. Process according to any of the preceding claims, **characterised in that** the laser removal is carried out with a pulse frequency of 1 to 50 kHz.

7. Process according to any of the preceding claims, **characterised in that** the laser removal is carried out with a pulse duration of 10 ns to 1000 ns.

8. Process according to any of the preceding claims, **characterised in that** the laser removal is carried out with a peak pulse power in the range 50 kW to 1 MW.

9. Process according to any of the preceding claims, **characterised in that** before or after the formation of the funnel (9), a section (7) of the opening (2) having circular cross-section is produced by laser boring.

10. Process according to any of the preceding claims, **characterised in that** during the removal of the layers (11), the laser beam (10) moves in a spiral path.

## Revendications

1. Procédé de réalisation d'un orifice dans un composant métallique dans lequel l'orifice (2) comprend, au moins pour un tronçon, un entonnoir non cylindrique (9), s'étend d'une première surface (5) vers une deuxième surface (6) d'une paroi de composant (3) et est réalisé avec un rayon laser (10), **caractérisé en ce que** le métal est, lors de la réalisation de l'entonnoir (9) pour la plus grande partie enlevé par sublimation du fait des paramètres de laser choisis et **en ce que** l'entonnoir (9) est réalisé avec une épaisseur pour l'essentiel constante par enlèvement de couches au laser (11), le rayon laser (10) étant déplacé lors de l'enlèvement des couches (11) sur la surface correspondante (6) du composant (1) dans plusieurs trajectoires voisines (12) dont la longueur et le nombre sont adaptés à la forme de l'entonnoir (9).

2. Procédé selon la revendication 1, **caractérisé en ce que** lors de l'enlèvement des couches (11) le rayon laser (10) se déplace à une vitesse constante par rapport à la surface correspondante (5, 6) de la paroi du composant (3).

3. Procédé selon la revendication 1 ou 2, **caractérisé en ce que** les couches (11) sont enlevées avec une épaisseur pour l'essentiel constante de 1 µm à 10 µm.

4. Procédé selon l'une des revendications précédentes, **caractérisé en ce que** la forme et les dimensions des couches (11) sont adaptées à la forme de l'entonnoir (9).

5. Procédé selon l'une des revendications précédentes, **caractérisé en ce que** le rayon laser (10) se déplace le long des différentes trajectoires (12) à une vitesse constante.

6. Procédé selon l'une des revendications précédentes, **caractérisé en ce que** l'enlèvement au laser est effectué avec une fréquence d'impulsion de 1 à 50 kHz.

7. Procédé selon l'une des revendications précédentes, **caractérisé en ce que** l'enlèvement au laser est effectué avec une durée d'impulsion de 10 ns à 1000 ns.

8. Procédé selon l'une des revendications précédentes, **caractérisé en ce que** l'enlèvement au laser est effectué avec des puissances de crête d'impulsions dans la plage de 50 kW à 1 MW.

9. Procédé selon l'une des revendications précédentes, **caractérisé en ce que**, avant ou après la réalisation de l'entonnoir (9), un tronçon à section transversale circulaire (7) de l'orifice (2) est formé par perçage au laser.

10. Procédé selon l'une des revendications précédentes, **caractérisé en ce que** le rayon laser (10) se déplace dans une trajectoire en forme de spirale lors de l'enlèvement des couches (11).
